# EUROPEAN PATENT SPECIFICATION

(11) **EP 0 405 683 B1**
(45) Date of publication and mention of the grant of the patent: **31.08.1994**
(21) Application number: 90201677.3
(22) Date of filing: 25.06.1990
(51) Int. Cl.: D06F 39/02, B65D 51/24, B29C 49/00, B29C 69/02

(54) **Hollow body**
Hohlkörper
Corps creux

(30) Priority: 26.06.1989 DK 3159/89
(43) Date of publication of application: 02.01.1991
(73) Proprietor: Colgate-Palmolive Company, New York, N.Y. 10022-7499 (US)
(72) Inventor: Vesborg, Steen, DK-2600 Glostrup (DK)
(74) Representative: Smulders, Theodorus A.H.J., Ir.

(56) References cited:
- EP-A- 0 261 713
- EP-A- 0 285 466
- GB-A- 2 208 290
- US-A- 4 139 129

## Description

The present invention relates to a dosing and dispensing unit as disclosed in the pre-characterizing part of claim 1 as known from EP-A-0 261 713 or EP-A-0 285 460.

These known combinations of a bottle closure and a closing and dispensing unit, sealingly attachable to the neck of a bottle comprises at least two separate parts, i.e., the coupling means and the cup-shaped part.

The object of the invention is to provide a dosing and dispensing unit of the subject kind, the manufacture of which is more simple and which is therefore less expensive to produce.

To this end the closing and dispensing unit (as disclosed in EP-A-0 285 460) of the invention has the features as cited in the characterizing part of claim 1.

As a result the hollow body is manufactured simply and inexpensively in a plurality of different geometries.

According to the invention the tubular part can convergingly extend into the interior of the cup-shaped part. This particular embodiment has practical advantage.

Further advantageous embodiments of the invention are apparent from the subclaims and the detailed description of the invention.

Moreover, the present invention relates to a method of manufacturing a hollow body comprising an outer cup-shaped part, which defines a hollow interior and has an opening, and a tubular part extending from the opening substantially into the interior of the cup-shaped part. The method is characterized by forming an article by means of extrusion blow molding or injection blow molding in a suitable mold, said article comprising the outer cup-shaped part and a neck portion substantially corresponding to the tubular part and extending from the opening of the cup-shaped part in a direction away from its interior, whereupon the neck portion is inverted into the interior of the cup-shaped part to form the tubular part. Thus it is possible to manufacture the hollow body as an integral unit, resulting in a simple and inexpensive manufacture.

Further advantageous embodiments of the method according to the invention appear from the subclaims and the subsequent detailed description of the invention.

The invention is described in greater detail below and with reference to the accompanying drawings, in which:

### Brief Description of the Drawings

Fig. 1 is a first embodiment of a hollow body according to the invention in form of a dosage device for releasing a fluid detergent in the drum of a washing machine during a wash cycle, the hollow body forming a cap on a spout means of a plastic bottle;
Fig. 2 shows the assembly of Fig. 1 turned 180° and resting on the hollow body;
Fig. 3 shows the assembly of Fig. 1 returned to its original position;
Fig. 4 shows an assembly corresponding to the one of Fig. 1 except that the spout means has been replaced by a nozzle means with an ascending tube extending to the bottom of the plastic bottle;
Fig. 5 shows the hollow body of Figs. 1-4 removed from the plastic bottle;
Fig. 6 shows a blow-molded article for the hollow body of Fig. 5;
Fig. 7 shows another embodiment of a hollow body according to the invention in form of a combined closure and dosage device; and
Fig. 8 shows a blow-molded article for the hollow body of Fig.7.

### Description of the Preferred Embodiments

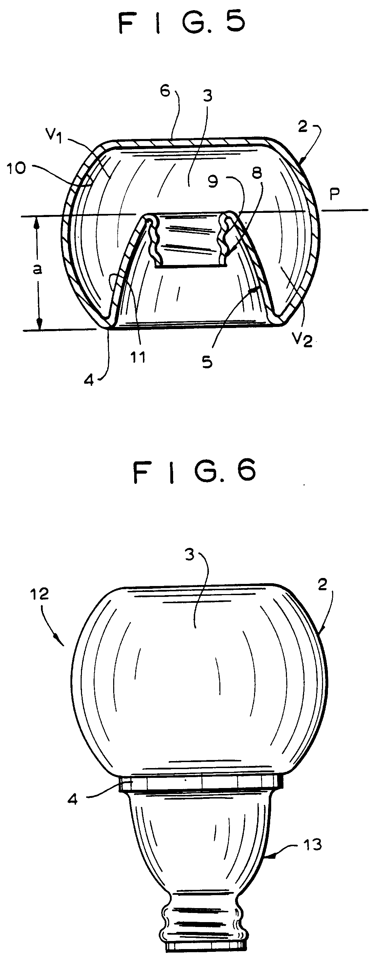

Fig. 5 is a sectional view through a first embodiment of a hollow body 1 according to the invention. The hollow body 1 comprises an outer cup-shaped part 2, which defines a hollow interior 3 and has an opening 4, and a tubular part 5 extending from the opening 4 into the interior of the cup-shaped part 2. The hollow body 1 and the tubular part 5 from a single piece made of a plastic material. The outer cup-shaped part 2 is substantially spherical and provided with a planar surface 6 opposite the opening 4. The tubular part converges in a direction away from the opening 4 towards an inner end 7 thereof. A cylindrical part 8 is attached to the inner end 7 and extends towards the opening 4. The cylindrical part 8 is annular and provided on the outside with a thread 9.

The tubular part 5 extends a distance a into the interior 3 of the hollow body such that a volume V₁ defined between a plane p perpendicular to the center axis c of the opening 4 through the inner edge 7 of the tubular part 5 and the inner surface 10 of the cup-shaped part 2 is substantially equal to a volume V₂ defined by the above plane p and the inner surfaces 11, 10 of the tubular part 5 and the cup-shaped part 2.

Fig. 6 shows a blow-molded article or molding 12 of the hollow body of Fig. 5. The molding comprises the outer cup-shaped part 2 and a neck portion 13 substantially corresponding to the tubular part, said neck portion extending from the opening 4 of the cup-shaped part in a direction away from the interior 3. When the neck portion 13 is inverted into the interior 3 of the cup-shaped part it forms the tubular part 5 of the hollow body 1 of Fig. 5.

The inversion of the neck portion 13 into the cup-shaped part 2 to form the tubular part 5 can be performed after the molding 12 has been removed from the mold in question, or while it is still in said mold. The inversion can, moreover, be performed at a temperature close to or above the softening temperature of the plastic material used or at a temperature below said softening temperature.

Suitable plastic materials include any plastics which can be molded by means of extrusion blow molding or injection blow molding, for example polypropylene.

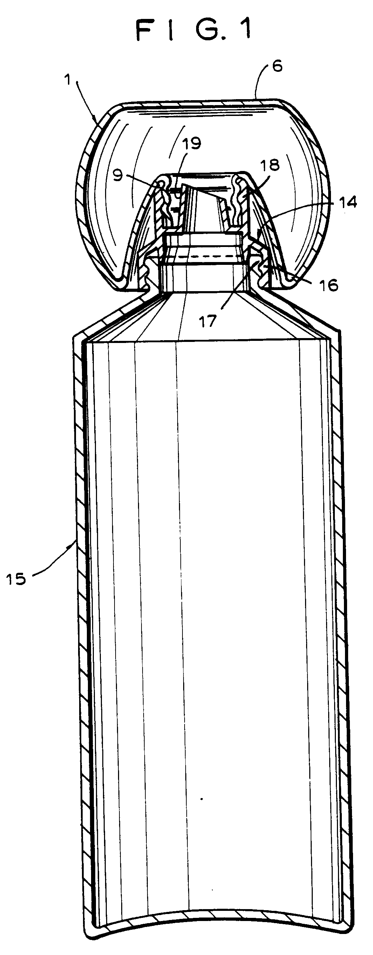

Fig. 1 shows the hollow body of Fig. 5 used as a cap on a spout means 14 of a plastic bottle 15. The spout means 14 has an inner thread 16 engaging an outer thread 17 on the neck of the bottle. The spout means 14 further has a second inner thread 18 onto which the hollow body is screwed by means of its outer thread 9. Finally, the spout means 14 is provided with a spout 19 which can be fully extended to the bottom or the planar surface 6 of the hollow body 1 when the latter is screwed on.

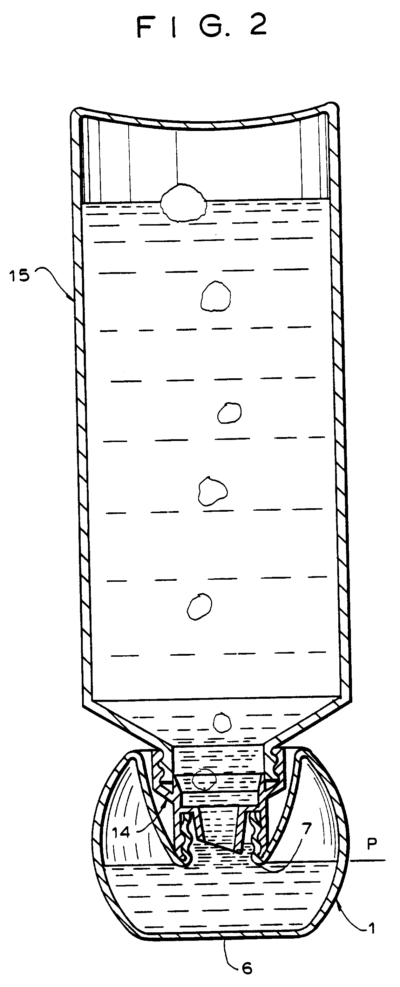

Fig. 2 shows the assembly of Fig. 1 comprising the bottle 15, the spout means 14 and the hollow body turned 180° so that it rests on the planar surface 6 of the hollow body 1. Consequently, a fluid, i.e., a fluid detergent in the bottle 15, flows through the spout means 14 down into the hollow body 1, thus filling the latter to a level substantially corresponding to the plane p through the inner edge 7. When the assembly is returned to its original position, so that the bottle stands in its normal position, the main part of the fluid remains in the hollow body 1. This is due to the fact that the volume V₁ above the plane p and the volume V₂ below the plane p of the hollow body are substantially equal. The hollow body 1 thus meters precisely and holds a predetermined amount of the detergent. The hollow body 1 containing the fluid or fluid detergent can then be removed from the spout means on the neck portion and be transferred to the drum of a washing machine for metered release of the detergent during a wash cycle.

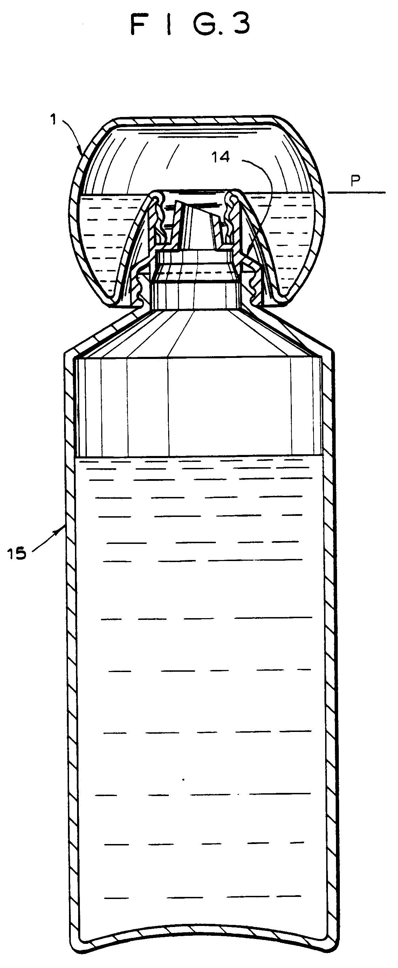

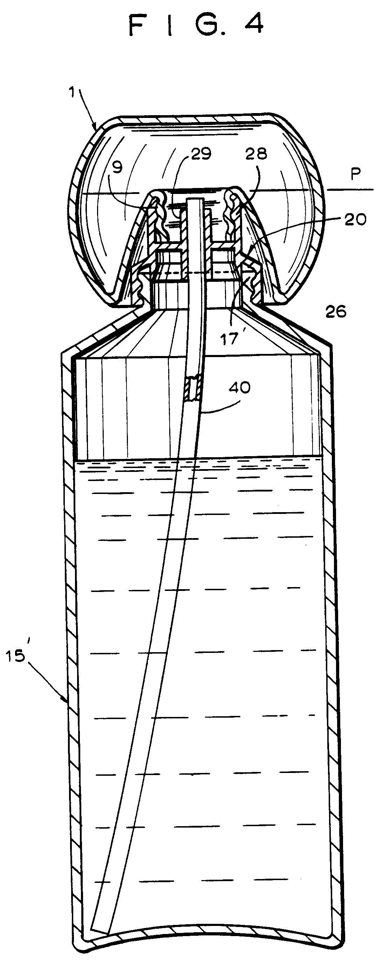

Fig. 4 shows an assembly substantially corresponding to the one of Figs. 1-3 with the exception that the spout means has been replaced by a nozzle means 20, and the plastic bottle 15′ is squeezable. The nozzle means 20 has an inner thread 26 corresponding to the one of the spout means 14 of Figs. 1-3 for screwing the nozzle means onto an outer thread 17′ of the neck of the bottle 15′, and a second inner thread 28 onto which the hollow body 1 is screwed by means of the outer thread 9 of the latter. Furthermore, the nozzle means 20 has a centrally arranged nozzle 29 connected with a tube 40 extending down to the bottom of the bottle 15′. To transfer a portion of the fluid in the bottle 15′ to the hollow body 1, the threaded engagement of the latter and the nozzle means is slightly loosened so that it is no longer air-tight, whereupon the bottle 15′ is squeezed. Thus the fluid will be pressed through the tube 40 and the nozzle 29 up to the hollow body 1. When the hollow body 1 is filled with the fluid to a level above the plane p, pressure on the bottle is released. This results in a lowering of the fluid level in the hollow body 1 down to the plane p, and surplus fluid is sucked back into the bottle 15′ through the nozzle 29 and the tube 40. The hollow body is then screwed off the nozzle means 20 and used for metered release of the contained fluid into the drum of a washing machine during a wash cycle.

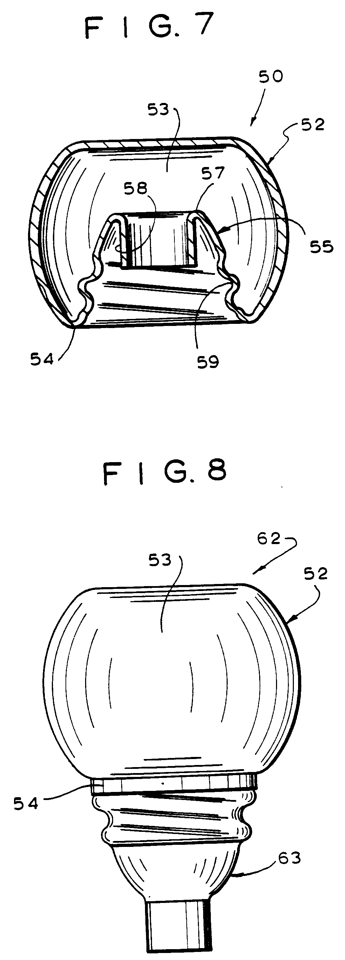

Fig. 7 shows another embodiment of a hollow body 50 according to the invention. The hollow body 50 comprises an outer cup-shaped part 52, which defines a hollow interior 53 and has an opening 54, and a tubular part 55. The latter forms a single piece with the cup-shaped part 52 and extends from the opening 54 substantially into its interior 53. The inner edge 57 of the tubular part 55 is provided with a cylindrical part 58 extending towards the opening 54. The inside of the tubular part 55 near the opening 54 is provided with an inner thread 59 engaging the corresponding outer thread of the bottle, thus turning the hollow body 50 into a cap for said bottle.

Fig. 8 shows a molding 62 for the hollow body 50. The molding is manufactured by means of extrusion blow molding or injection blow molding using a suitable tool. The molding comprises the outer cup-shaped part 52 and a neck portion 63 substantially corresponding to the tubular part 55, said neck portion extending from the opening 54 of the cup-shaped part in a direction away from its interior 53. When the neck portion 63 is inverted into the interior of the cup-shaped part 52 it forms the tubular part 55. The inversion can be performed while the molding 12 is still in the mold tool or after it has been removed therefrom. Further the inversion can be performed at a temperature above or below the softening temperature of the plastic material used.

Apart from a cap the hollow body of Fig. 7 can also be used as a dosage device to release a fluid detergent in the drum of a washing machine during a wash cycle.

The invention may be varied in many ways without deviating from its scope. The outer thread of Fig. 7 can, for instance, be replaced by another fastening means provided to fasten the hollow body as a cap attached to the bottle containing, for instance, a fluid detergent.

## Claims

1. A dosing and dispensing unit usable as a closing cap on a vessel containing liquid to be dispersed, said unit being in the form of a hollow plastic body (1,50), said body having a cup-shaped, substantially spherical part (2,52) provided with an opening (4,54) and a tubular part (5,55) extending from said opening (4,54) into the hollow interior (3,53) of the cup-shaped part (2,52) and terminating at a distance from the wall part (6) of the cup-shaped part (2,52) opposite said opening (4,54), characterized by said tubular part (5,55) convergingly extending into the interior (3,53) of the cup-shaped part (2,52) and by the inner end (7,57) of the tubular part (5,55) being provided with a substantially cylindrical part (8,58), extending towards said opening (4,54) of the hollow body (1,51), said hollow body (1,51), said tubular part (5,55) and said cylindrical part (8,58) being integrally manufactured in the form of a single piece of plastic material using blow molding.

2. The hollow body according to claim 1, characterized by said tubular part (5,55) being provided with a fastening means, such as a thread (9,59).

3. The hollow body according to claim 1 or 2, wherein the tubular part (5, 55) extends a distance a into the interior of the hollow body (1, 50), such that a volume V₁ defined between a plane p perpendicular to a center axis of the opening (4, 54) through the inner edge (7, 57) of the tubular part (5, 55) and the inner surface of the cup-shaped part (2, 52) is substantially equal to a volume V₂ defined by the plane p and the inner surfaces of the tubular part (5, 55) and the cup-shaped part (2, 52).

4. A method of manufacturing a hollow body comprising the steps of: forming an article (12, 62) by means of extrusion blow molding or injection blow molding of a plastic material with a suitable mold, said article comprising an outer cup-shaped part (2, 52) and a neck portion (13, 63) substantially corresponding to a tubular part (5, 55) and extending from an opening (4, 54) of the cup-shaped part (2, 52) in a direction away from its interior (3, 53), characterized in that a neck portion (13, 63) is inverted into the interior of the cup-shaped part (2, 52) to form the tubular part (5, 55), said inversion being performed at about the softening temperature of the plastic material.

5. The method according to claim 4, wherein the neck portion (13, 63) is inverted into the cup-shaped part (2, 52) after the article (12, 62) has been removed from the mold.

6. The method according to claim 5, wherein the neck portion (13, 63) is inverted into the cup-shaped part (2, 52) at a temperature below the softening temperature of the plastic used.

7. The use of a hollow body as defined in claim 1 in the drum of a washing machine, to release a fluid detergent in the drum of a washing machine during a wash cycle.

## Patentansprüche

1. Dosier- und Abgabeeinheit zur Verwendung als Verschlußkappe auf einem abzugebende Flüssigkeit enthaltenden Behälter in Form eines Kunststoffhohlkörpers (1,50), der einen schalenförmigen, im wesentlichen kugeligen Teil (2,52) aufweist, versehen mit einer Öffnung (4,54) und einem Rohrteil (5,55), der sich von der Öffnung (4,54) in den Innenhohlraum (3,53) des schalenförmigen Teiles (2,52) erstreckt und im Abstand vom Wandteil (6) des schalenförmigen Teiles (2,52) gegenüber der Öffnung (4,54) endet, dadurch gekennzeichnet, daß der Rohrteil (5,55) sich konvergierend in den Innenraum (3,53) des schalenförmigen Teiles (2,52) erstreckt und daß das Innenende (7,57) des Rohrteiles (5,55) mit einem im wesentlichen zylindrischen Teil (8,58) versehen ist, der sich in Richtung der Öffnung (4,54) des Hohlraumes (1,51) erstreckt, wobei der Hohlraum (1,51), der Rohrteil (5,55) und der zylindrische Teil (8,58) unter Anwendung eines Blasformverfahrens integral in Form eines einstückigen Kunststoffmaterials hergestellt sind.

2. Hohlkörper nach Anspruch 1, dadurch gekennzeichnet, daß der Rohrteil (5,55) mit einem Befestigungsmittel wie einem Gewinde (9,59) versehen ist.

3. Hohlkörper nach Anspruch 1 oder 2, wobei der Rohrteil (5,55) sich über einen Abstand a in das Innere des Hohlkörpers (1,50) derart erstreckt, daß ein zwischen einer senkrecht auf der Achse der Öffnung (4,54) stehenden Ebene p durch den Innenrand (7,57) des Rohrteiles (5,55) und der Innenfläche des schalenförmigen Teiles (2,52) begrenztes Volumen V₁ im wesentlichen gleich dem durch die Ebene p und die Innenflächen des Rohrteiles (5,55) und des schalenförmigen Teiles (2,52) begrenztes Volumen V₂ ist.

4. Verfahren zur Herstellung eines Hohlkörpers, wobei ein Gegenstand (12,62) durch Extrusions- oder Spritzblasen eines Kunststoffmaterials mit einer geeigneten Form geformt wird, welcher Gegenstand einen äußeren schalenförmigen Teil (2,52) und einen Halsteil (13,63) aufweist, der im wesentlichen einem Rohrteil (5,55) entspricht und sich von einer Öffnung (4,54) des schalenförmigen Teiles (2,52) in einer vom Innenraum (3,53) abgekehrten Richtung erstreckt, dadurch gekennzeichnet, daß ein Halsteil (13,63) in das Innere des schalenförmigen Teiles (2,52) umgekehrt wird, um den Rohrteil (5,55) zu bilden, wobei die Umkehrung ungefähr bei der Erweichungstemperatur des Kunststoffmaterials erfolgt.

5. Verfahren nach Anspruch 4, wobei der Halsteil (13,63) nach Entfernen des Gegenstandes (12,62) aus der Form in den schalenförmigen Teil (2,52) umgekehrt wird.

6. Verfahren nach Anspruch 5, wobei der Halsteil (13,63) bei einer Temperatur unterhalb der Erweichungstemperatur des verwendeten Kunststoffes in den schalenförmigen Teil (2,52) umgekehrt wird.

7. Verwendung eines Hohlkörpers nach Anspruch 1 in der Trommel einer Waschmaschine, um während eines Waschzyklus ein flüssiges Waschmittel in der Trommel einer Waschmaschine abzugeben.

## Revendications

1. Unité de dosage et de libération, utilisable sur un récipient contenant un liquide à délivrer, ladite unité présentant la forme d'un corps creux en plastique (1, 50), ledit corps ayant une partie (2, 52) en forme de coupe, essentiellement sphérique, dotée d'une ouverture (4, 54) et d'une partie tubulaire (5, 55) s'étendant depuis ladite ouverture (4, 54) jusque dans l'intérieur creux (3, 53) de la partie (2, 52) en forme de coupe, et se terminant à distance de la partie de paroi (6) de la partie (2, 52) en forme de coupe qui est située en face de ladite ouverture (4, 54), caractérisée en ce que ladite partie tubulaire (5, 55) s'étend de manière convergente dans l'intérieur (3, 53) de la partie (2, 52) en forme de coupe, et en ce que l'extrémité intérieure (7, 57) de la partie tubulaire (5, 55) est dotée d'une partie (8, 58) essentiellement cylindrique s'étendant en direction de ladite ouverture (4, 54) du corps creux (1, 51), ledit corps creux (1, 51), ladite partie tubulaire (5, 55) et ladite partie cylindrique (8, 58) étant fabriqués d'une seule pièce, sous la forme d'une pièce unique en plastique, par extrusion et soufflage.

2. Corps creux selon la revendication 1, caractérisé en ce que ladite partie tubulaire (5, 55) est dotée de moyens de fixation tels qu'un filetage (9, 59).

3. Corps creux selon la revendication 1 ou 2, dans lequel la partie tubulaire (5, 55) s'étend sur une distance a dans l'intérieur du corps creux (1, 50), de telle sorte qu'un volume V_{1,} défini entre un plan p perpendiculaire à un axe central de l'ouverture (4, 54), passant par le bord intérieur (7, 57) de la partie tubulaire (5, 55) et par la surface intérieure de la partie (2, 52), est essentiellement égal à un volume V₂ défini par le plan p et les surfaces intérieures de la partie tubulaire (5, 55) de la partie (2, 52) en forme de coupe.

4. Procédé de fabrication d'un corps creux, comportant les étapes consistant à: avec un moule approprié, former un article (12, 62) au moyen d'un moulage par extrusion et soufflage ou d'un moulage par injection et soufflage d'un matériau plastique, ledit article comportant une partie extérieure (2, 52) en forme de coupe et une partie de col (13, 63) correspondant essentiellement à une partie tubulaire (5, 55) et s'étendant depuis une ouverture (4, 54) de la partie (2, 52) en forme de coupe, dans une direction qui s'éloigne de son intérieur (3, 53), caractérisé en ce qu'une partie (13, 63) en col est renversée dans l'intérieur de la partie (2, 52) en forme de coupe, pour former la partie tubulaire (5, 55), ledit renversement étant effectué environ à la température de ramollissement du matériau plastique.

5. Procédé selon la revendication 4, dans lequel la partie (13, 63) en col est renversée dans la partie (2, 52) en forme de coupe après que l'article (12, 62) a été extrait du moule.

6. Procédé selon la revendication 5, dans lequel la partie (13, 63) en col est renversée dans la partie (2, 52) en forme de moule à une température inférieure à la température de ramollissement du plastique utilisé.

7. Utilisation dans le tambour d'une machine à laver d'un corps creux selon la revendication 1, pour libérer un détergent fluide dans le tambour d'une machine à laver au cours d'un cycle de lavage.
